# EUROPÄISCHE PATENTANMELDUNG

(11) **EP 1 384 868 A2**
(43) Veröffentlichungstag der Anmeldung: **28.01.2004**
(21) Anmeldenummer: 03002908.6
(22) Anmeldetag: 10.02.2003
(51) Int. Cl.: F01N 9/00, F02M 25/07, F02D 41/02, F02B 37/12

(54) **Verfahren und Vorrichtung zur Steuerung eines Abgasnachbehandlungssystems**

(30) Priorität: 26.07.2002 DE 10234092
(71) Anmelder: ROBERT BOSCH GMBH, 70442 Stuttgart (DE)
(72) Erfinder: Becker, Carsten, 71394 Kernen I.R. (DE); Wirth, Ralf, 71229 Leonberg (DE)

(57) **Zusammenfassung**

Es werden ein Verfahren und eine Vorrichtung zur Steuerung eines Abgasnachbehandlungssystems, insbesondere eines Partikelfilters (115), beschreiben. Dabei ist ein Sollwert für ein Lambdasignal (192) oder eine Änderung eines Lambdasignals vorgebbar. Ein Istwert für das Lambdasignal oder für die Änderung des Lambdasignals wird erfasst. Ausgehend von dem Vergleich zwischen dem Istwert und dem Sollwert wird ein Ansteuersignal für ein Stellelement (104a,104b), mit dem die Reaktion im Abgasnachbehandlungssystem steuerbar ist, derart vorgegeben, dass sich der Istwert dem Sollwert annähert.

## Beschreibung

### Stand der Technik

Die Erfindung betrifft ein Verfahren und eine Vorrichtung zur Steuerung eines Abgasnachbehandlungssystems, insbesondere eines Partikelfilters.

Verfahren und Vorrichtungen zur Steuerung eines Abgasnachbehandlungssystems, insbesondere eines Partikelfilters sind bekannt. Häufig sind Brennkraftmaschinen, insbesondere direkteinspritzende Brennkraftmaschinen mit Abgasnachbehandlungssystemen ausgerüstet, die insbesondere einen Partikelfilter umfassen können. Zur Regeneration des Partikelfilters sind Temperaturen oberhalb der üblichen Abgastemperaturen notwendig. Ohne zusätzliche Maßnahmen oxidieren die Partikel bei ca. 550 bis 650 °C. Hierzu müssen üblicherweise temperatursteigernde Maßnahmen eingeleitet werden.

Die Regeneration wird üblicher Weise eingeleitet, wenn der Partikelfilter eine Grenzbeladung erreicht hat. In bestimmten Betriebszuständen der Brennkraftmaschine kann der Fall eintreten, dass die Regeneration unkontrolliert oder zu langsam abläuft. Insbesondere bei einem unkontrollierten Abbrand kann es aufgrund der stark exothermen Oxidation der Partikel zu einer unerwünschten Wärmefreisetzung kommen, die mit steilen wandernden Temperaturfronten im Filter und sehr hohen Temperaturen einhergehen. Solche Zustände sollten_sicher vermieden oder, falls eingetreten, über geeignete Maßnahmen kontrolliert und beherrscht werden. Läuft die Regeneration zu langsam ab, müssen die Regenerationsmaßnahmen u.U. zu lange aufrecht erhalten werden, was einen erhöhten Kraftstoffverbrauch zur Folge hat. Zudem besteht die Gefahr, dass der Betrieb der Brennkraftmaschine unterbrochen oder in einen Betriebszustand überführt wird, der einen Abbruch der Regeneration erzwingt.

Dadurch, dass ein Istwert für die zeitliche Änderung des Lambdasignals erfasst und ausgehend von dem Vergleich zwischen dem Istwert und einem Sollwert ein Ansteuersignal für ein Stellelement, mit dem die Reaktion im Abgasnachbehandlungssystem steuerbar ist, derart vorgegeben wird, dass sich der Istwert dem Sollwert annähert, kann die Regeneration des Partikelfilters optimal gesteuert werden.

Vorteilhafte und zweckmäßige Ausgestaltungen und Weiterbildungen der Erfindung sind in den Unteransprüchen gekennzeichnet.

### Zeichnung

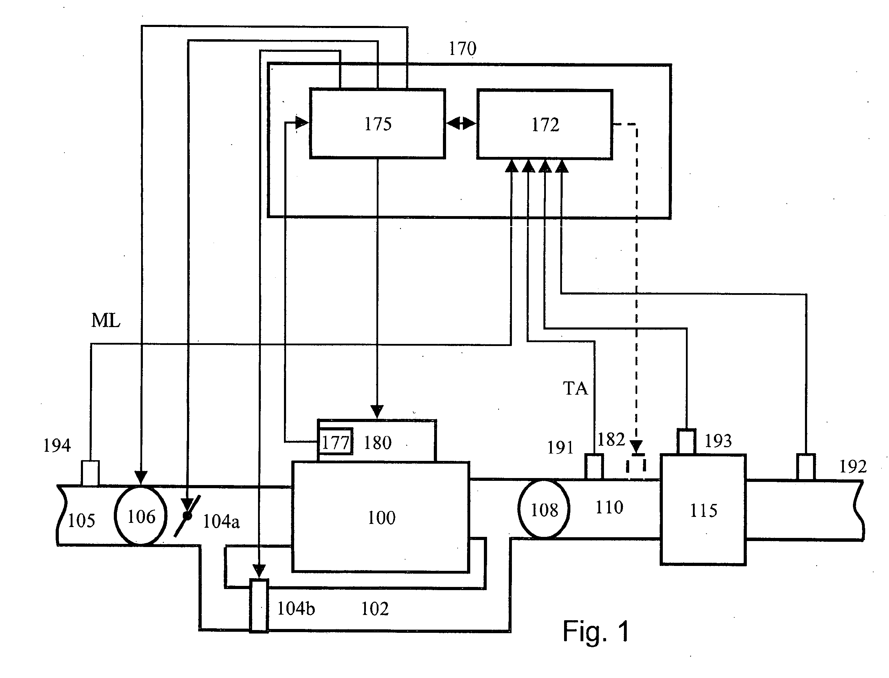

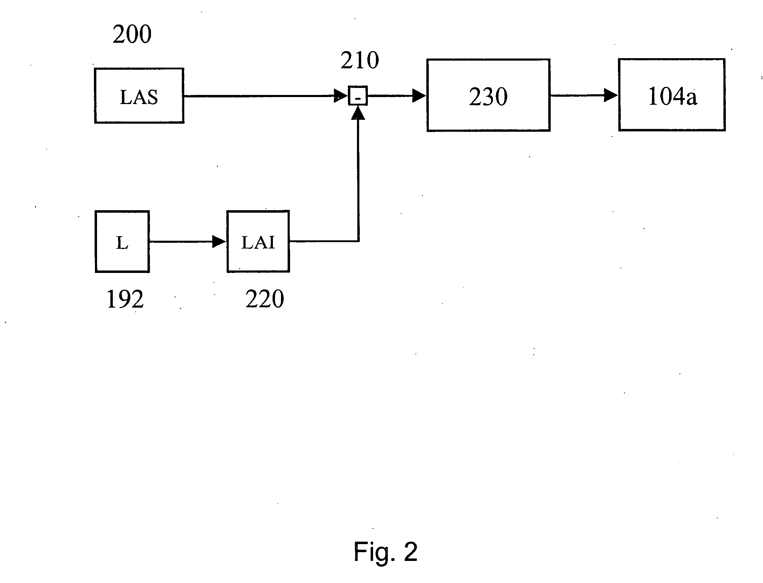

Die Erfindung wird nachstehend anhand der in der Zeichnung dargestellten Ausführungsformen erläutert. Es zeigen Figur 1 ein Diagramm eines Systems zur Steuerung einer Brennkraftmaschine, Figur 2 ein Blockdiagramm des erfindungsgemäßen Verfahrens.

### Beschreibung der Ausführungsbeispiele

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei handelt es sich um einen Partikelfilter. Des weiteren ist es möglich, dass weitere Katalysatoren zu Umsetzung unterschiedliche Schadstoffe oder zur Konditionierung der Abgase vorgesehen sind.

Des weiteren ist eine Steuereinheit 170 vorgesehen, die wenigstens eine Motorsteuereinheit 175 und eine Abgasnachbehandlungssteuereinheit 172 umfasst. Die Motorsteuereinheit 175 beaufschlagt ein Kraftstoffzumesssystem 180 mit Ansteuersignalen. Die Abgasnachbehandlungssteuereinheit 172 tauscht mit der Motorsteuereinheit 175 Signale aus. Bei einer Ausgestaltung beaufschlagt die Abgasnachbehandlungssteuereinheit 172 ein Stellelement 182, das in der Abgasleitung vor dem Abgasnachbehandlungssystem oder im Abgasnachbehandlungssystem angeordnet ist, mit Ansteuersignalen.

Des weiteren können verschiedene Sensoren vorgesehen sein, die die Abgasnachbehandlungssteuereinheit und die Motorsteuereinheit mit Signalen versorgen. So ist wenigsten ein erster Sensor 194 vorgesehen, der Signale liefert, die den Zustand der Luft charakterisiert, die der Brennkraftmaschine zugeführt wird. Ein zweiter Sensor 177 liefert Signale, die den Zustand des Kraftstoffzumesssystems 180 charakterisieren. Wenigsten ein dritter Sensor 191 liefert Signale, die den Zustand des Abgases vor dem Abgasnachbehandlungssystem charakterisieren. Wenigsten ein vierter Sensor 193 liefert Signale, die den Zustand des Abgasnachbehandlungssystems 115 charakterisieren. Desweiteren liefert wenigstens ein Sensor 192 Signale, die den Zustand der Abgase nach dem Abgasnachbehandlungssystem charakterisieren. Vorzugsweise werden Sensoren, die Temperaturwerte und/oder Druckwerte erfassen, verwendet. Wenigstens ein Sensor 192 erfasst ein Signal L, das die chemische Zusammensetzungen des Abgases und/oder der Frischluft charakterisieren. Hierbei handelt es sich vorzugsweise um einen Lambdasensor.

Mit den Ausgangssignalen des ersten Sensors 194, des dritten Sensors 191, des vierten Sensors 193 und des fünften Sensors 192 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren.

Bei der dargestellten Ausführungsform ist in der Ansaugleitung 105 ein Verdichter 106 und in der Abgasleitung 110 eine Turbine 108 angeordnet. Die Turbine wird durch das durchströmende Abgas angetrieben und treibt über eine nicht dargestellte Welle den Verdichter 106 an. Durch geeignete Ansteuerung kann die Luftmenge, die der Verdichter verdichtet, gesteuert werden.

Ferner ist in der Ansaugleitung 105 eine Drosselklappe 104a angeordnet, mit der die Zufuhr von Frischluft in die Brennkraftmaschine beeinflussbar ist. Die Drosselklappe 104a ist ebenfalls von der Steuereinheit 175 ansteuerbar.

Ferner kann die Leitung 110 über eine Abgasrückführleitung 102 mit der Ansaugleitung 105 verbunden. In der Abgasrückführleitung 102 ist ein Abgasrückführventil 104b angeordnet, das ebenfalls von der Steuereinheit 175 ansteuerbar ist.

Bei der dargestellten Ausführungsform ist eine Drosselklappe, eine Abgasrückführung und ein steuerbarer Abgasturbolader vorgesehen. Erfindungsgemäß kann auch lediglich eine Drosselklappe oder eine Abgasrückführung vorgesehen sein.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Partikelfilters, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden.

Ausgehend von den vorliegenden Sensorsignalen berechnet die Motorsteuerung 175 Ansteuersignale zur Beaufschlagung des Kraftstoffzumesssystems 180. Dieses misst dann die entsprechende Kraftstoffmenge der Brennkraftmaschine 100 zu. Bei der Verbrennung können im Abgas Partikel entstehen. Diese werden von dem Partikelfilter im Abgasnachbehandlungssystem 115 aufgenommen. Im Laufe des Betriebs sammeln sich in dem Partikelfilter 115 entsprechende Mengen von Partikeln an. Dies führt zu einer Beeinträchtigung der Funktionsweise des Partikelfilters und/oder der Brennkraftmaschine. Deshalb ist vorgesehen, dass in bestimmten Abständen bzw. wenn der Partikelfilter einen bestimmten Beladungszustand erreicht hat, ein Regenerationsvorgang eingeleitet wird. Diese Regeneration kann auch als Sonderbetrieb bezeichnet werden.

Der Beladungszustand wird bspw. ausgehend von verschiedenen Sensorsignalen erkannt. So kann zum einen der Differenzdruck zwischen dem Eingang und dem Ausgang des Partikelfilters 115 ausgewertet werden. Zum anderen ist es möglich den Beladungszustand ausgehend von verschiedenen Temperatur- und/oder verschiedenen Druckwerten zu ermitteln. Des weiteren können noch weitere Größen zur Berechnung oder Simulation des Beladungszustands herangezogen werden. Eine entsprechende Vorgehensweise ist bspw. aus der DE 199 06 287 bekannt.

Erkennt die Abgasnachbehandlungssteuereinheit, dass der Partikelfilter einen bestimmten Beladungszustand erreicht hat, so wird die Regeneration initialisiert. Zur Regeneration des Partikelfilters stehen verschiedene Möglichkeiten zur Verfügung. So kann zum einen vorgesehen sein, dass bestimmte Stoffe über das Stellelement 182 dem Abgas zugeführt werden, die dann eine entsprechende Reaktion im Abgasnachbehandlungssystem 115 hervorrufen. Diese zusätzlich zugemessenen Stoffe bewirken unter anderem eine Temperaturerhöhung und/oder eine Oxidation der Partikel im Partikelfilter. So kann bspw. vorgesehen sein, dass mittels des Stellelements 182 Kraftstoffstoff und/oder Oxidationsmittel zugeführt werden. Ferner kann vorgesehen sein, dass der Anteil an rückgeführten Abgasen derart verändert wird, dass sich die Abgastemperatur erhöht.

Üblicherweise ist vorgesehen, dass der Beladungszustand ausgehend von verschiedenen Größen bestimmt wird. Durch Vergleich mit einem Schwellwert werden die unterschiedlichen Zustände erkannt und abhängig vom erkannten Beladungszustand die Regeneration eingeleitet.

Zur Reduzierung der Stickoxide von Verbrennungsmotoren ist eine Abgasrückführung vorgesehen. Der Anteil an rückgeführten Abgasen bzw. die Luftmenge, die der Brennkraftmaschine zugeführt wird, muss genau eingestellt werden, da bei einer zu hohen Abgasrückführrate die Partikelemissionen ansteigen, andererseits bei einer zu geringen Abgasrückführrate die NOx-Emissionen zunehmen. Um dies zu erreichen ist üblicherweise eine vom Betriebspunkt abhängige Steuerung und/oder Regelung der Abgasrückführrate vorgesehen.

Erfindungsgemäß ist vorgesehen, dass die Konzentration von Sauerstoff im Abgas erfasst wird. Die Konzentration von Sauerstoff bzw. der Volumenstrom von Sauerstoff kann beispielsweise mittels einer Lambda-Sonde gemessen werden und/oder aus Betriebsparametern des Motors berechnet bzw. simuliert werden. So kann beispielsweise der Sensor 191 als Lambdasonde ausgebildet sein. Dem Sauerstoffangebot im Abgas kommt eine erhebliche Bedeutung für die Abbrandgeschwindigkeit der im Partikelfilter abgeschiedenen Partikel zu, wobei je nach Betriebsbedingung eine stark heftige Oxidation im Partikelfilter zu einer unerwünscht hohen Wärmefreisetzung führen kann.

Erfindungsgemäß wird der Sauerstoffgehalt und/oder die Änderung der Sauerstoffkonzentration im Abgas auf einen solchen Sollwert geregelt, bei dem die Abbrandgeschwindigkeit einen optimalen Wert annimmt. Vorzugsweise werden im Verlauf der Regeneration unterschiedliche Sollwerte für den Sauerstoffgehalt gewählt.

Hierzu stehen verschiedene Möglichkeiten zur Verfügung. Zum einen kann Vorgesehen sein, dass die Abgasrückführrate erhöht, dass eine Drosselklappe im Ansaugtrakt der Brennkraftmaschine geschlossen oder zumindest teilweise geschlossen wird, und/oder dass zusätzlich Kraftstoff eingespritzt wird, der den Sauerstoffgehalt reduziert, aber keinen Beitrag zum Drehmoment liefert.

In Figur 2 ist die Regelung detaillierter dargestellt. In der dargestellten Ausführungsform wird die Änderung des Lambdasignals auf einen vorgegebenen Sollwert LAS eingeregelt.

Eine Sollwertvorgabe 200 gibt den Sollwert LAS für die Änderung des Lambdasignals vor. Diese wird in einem Verknüpfungspunkt mit dem Ausgangssignal der Differenzierer 220 LAI verknüpft. Dem Differenzierer 220 wird das Ausgangssignal L des Lambdasensors 192 zugeführt. Mit dem Ausgangssignal des Verknüpfungspunktes 210 wird ein Regler 230 beaufschlagt, der wiederum ein Stellelement 104a beaufschlagt. Bei der dargestellten Ausführungsform handelt es sich bei dem Stellelement um eine Drosselklappe, mit der der Anteil des rückgeführten Abgases beeinflusst werden kann. Femer können auch der Lader und/oder ein Abgasrückführventil 104b angesteuert werden. Alternativ oder ergänzend können als Stellglied auch andere Stellelemente, die der Sauerstoffkonzentration im Abgas beeinflussen, angesteuert werden.

Der Regler 230 bestimmt ausgehend von dem der Differenz zwischen dem Istwert LAI und dem Sollwert LAS für das differenzierte Lambdasignal das Ansteuersignal zur Beaufschlagung des Stellelements. Als Istwert wird in dem dargestellten Ausführungsbeispiel der differenzierte Ausgangssignal L des Lambdasensors verwendet.

Als Sollwert wird ein entsprechender Wert, für die Änderung des Lambdasollwertes verwendet. Dies bedeutet, durch Beeinflussung der Luftmenge, die der Brennkraftmaschine zugeführt wird, die Änderung des Lambdasignals auf einen vorgegebenen Sollwert eingeregelt.

Bei einer Ausgestaltung der Erfindung kann auch vorgesehen sein, dass direkt das Lambdasignal auf einen entsprechenden Sollwert eingeregelt wird.

Durch die Regelung des Lambdasignals bzw. der Regelung der Änderung des Lambdasignals wird der Abbrand der Partikel während der Regeneration unmittelbar gesteuert. Dadurch kann sicher verhindert werden, dass sich die Abbrandgeschwindigkeit unzulässig ändert und/oder die Temperatur auf unzulässige Werte ansteigt. Ferner kann verhindert werden, dass die Abbrandgeschwindigkeit auf zu geringe Werte abfällt.

Besonders vorteilhaft ist es, wenn die Regelung nur während der Regeneration und/oder während bestimmter Phasen der Regeneration aktiv ist. So kann vorgesehen sein, dass der Beginn der Regeneration und am Ende der Regeneration keine Regelung erfolgt, da während dieser Phasen kein Abbrand der Partikel erfolgt, da zur Beginn der Regeneration die Temperatur zu niedrig und am Ende der Regeneration keine Partikel vorhanden sind.

Ferner ist vorteilhaft, wenn für bestimmte Phasen der Regeneration unterschiedliche Sollwerte vorgebbar sind. So kann vorgesehen sein, dass bei Beginn der Regeneration und am Ende der Regeneration andere Sollwerte vorgegeben werden als bei der eigentlichen Regeneration, da zu Beginn und am Ende der Regeneration kein oder ein geringerer Abbrand der Partikel erfolgt.

## Patentansprüche

1. Verfahren zur Steuerung eines Abgasnachbehandlungssystems, insbesondere eines Partikelfilters, wobei ein Sollwert für ein Lambdasignal oder eine Änderung eines Lambdasignals vorgebbar ist, und ein Istwert für das Lambdasignal oder für die Änderung des Lambdasignals erfasst wird, und dass ausgehend von dem Vergleich zwischen dem Istwert und dem Sollwert ein Ansteuersignal für ein Stellelement, mit dem die Reaktion im Abgasnachbehandlungssystem steuerbar ist, derart vorgegeben wird, dass sich der Istwert dem Sollwert annähert.

2. Verfahren nach Anspruch 1, **dadurch gekennzeichnet, dass** der Sollwert derart vorgeben wird, dass sich eine gewünschte Abbrandgeschwindigkeit der Partikel einstellt.

3. Verfahren nach Anspruch 1, **dadurch gekennzeichnet, dass** der Sollwert derart vorgeben wird, dass sich eine gewünschte Temperatur im Abgasnachbehandlungssystem einstellt.

4. Verfahren nach einem der Anspruch 1 bis 3, **dadurch gekennzeichnet, dass** während unterschiedlicher Phasen eines Regenerationsvorganges des Abgasnachbehandlungssystems unterschiedliche Sollwerte vorgebbar sind.

5. Verfahren nach einem der Anspruch 1 bis 3, **dadurch gekennzeichnet, dass** die Regelung nur während bestimmter Phasen eines Regenerationsvorganges des Abgasnachbehandlungssystems erfolgt.

6. Vorrichtung zur Steuerung eines Abgasnachbehandlungssystems, insbesondere eines Partikelfilters, mit Mitteln, die einen Sollwert für ein Lambdasignal oder eine Änderung eines Lambdasignals vorgeben, mit Mitteln die einen Istwert für das Lambdasignal oder für die Änderung des Lambdasignals erfassen, und mit Mitteln die ausgehend von dem Vergleich zwischen dem Istwert und dem Sollwert ein Ansteuersignal für ein Stellelement, mit dem die Reaktion im Abgasnachbehandlungssystem steuerbar ist, derart vorgeben, dass sich der Istwert dem Sollwert annähert.

7. Vorrichtung nach Anspruch 6, **dadurch gekennzeichnet, dass** mittels des Stellelements die Sauerstoffmenge im Abgas beeinflusst wird.

8. Vorrichtung nach Anspruch 6 oder 7, **dadurch gekennzeichnet, dass** das Stellelement als Abgasrückführsteller ausgebildet ist.

9. Vorrichtung nach 6 oder 7, **dadurch gekennzeichnet, dass** das Stellelement als Drosselklappe ausgebildet ist.

10. Vorrichtung nach einem der Ansprüche 6 bis 9, **dadurch gekennzeichnet, dass** das Stellelement zur Beeinflussung des Laders ausgebildet ist.
